(19) Europäisches Patentamt
European Patent Office
Office européen des brevets

(11) EP 2 592 577 A1

(12) EUROPEAN PATENT APPLICATION

(43) Date of publication:
15.05.2013 Bulletin 2013/20

(51) Int Cl.:
*G06F 17/50* (2006.01)

(21) Application number: 11188156.1

(22) Date of filing: 08.11.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ABB Research Ltd.
8050 Zürich (CH)

(72) Inventors:
• Kreutzer, Peter
  5443 Niederrohrdorf (CH)
• Sivanthi, Thanikesavan
  5413 Birmenstorf (CH)

(74) Representative: ABB Patent Attorneys
C/o ABB Schweiz AG
Intellectual Property (CH-LI/IP)
Brown Boveri Strasse 6
5400 Baden (CH)

(54) **Connection of substation automation devices in a substation automation system**

(57) A cable-plan generator (10) for generating a cable-plan (15) for connecting a plurality of substation automation devices (A, B, C, D) of a substation automation system (16) comprises a function generator (13) and an optimizer (14). The function generator (13) is configured to receive data specifying connection requirements between substation devices and data specifying cable properties of a set of cable types in order to generate an objective function. The optimizer (14) is configured to determine an optimal solution for the objective function and for generating a corresponding cable-plan (15) for connecting a plurality of substation automation devices (A, B, C, D) of a substation automation system (16). Accordingly, substation automation devices (A, B, C, D) of a substation automation system (16) are optimally connected, as regards for example costs or reliability.

Fig. 1

EP 2 592 577 A1

**Description**

FIELD OF THE INVENTION

The present invention relates to a cable-plan generator for generating a cable-plan for connecting a plurality of substation automation devices of a substation automation system. The invention also relates to a method for connecting a plurality of substation automation devices of a substation automation system.

BACKGROUND OF THE INVENTION

Electrical substations are part of electrical power systems and may include a substation automation system comprising substation automation devices connected with cables. Cabling between different substation automation devices is a major cost factor in the construction of a substation automation system. In cable engineering for connecting substation automation devices, selection and allocation of cables is dealt with in order to provide for transmission of physical signals between substation automation devices. The current practice is to manually select and allocate cables in computer aided design (CAD) software. The typical templates of different substation automation devices are instantiated in the CAD software and then appropriate cable types are manually applied in order to provide for transmission of physical signals between the substation automation devices. The current practice does not consider the location of a substation automation device, or the location is based on a rough estimate.

Substation configuration language (SCL), defined in "IEC Communication Networks and Systems for Power Utility Automation", Part 6: Configuration Description Language for Communication, is the IEC 61850 standard format to specify the different substation device entities, the data model and the communication services of a substation automation device. The SCL file provides the complete information about an IEC 61850 based substation automation system.

US 5,689,417 describes a rule based expert system for identifying and selecting from a group of medium-voltage cable construction specifications a desired medium-voltage cable construction specification meeting a set of medium-voltage cable requirement specifications and producing a price quotation. No cost optimization is considered in the cable selection. Moreover, the location of the physical devices is not considered when deriving the cable-plan.

US 4,939,668 describes a system for designing an intercommunication network among a plurality of devices. Stored rules meet design requirements, wherein the rules are revised dynamically. A requestor is designed to access all rules and to revise a portion of the data. A designer has the ability to revise another portion of the data. Only a few requestors are allowed to create a cable description. Only a few cable designers are allowed to design a network of completed cable descriptions.

DESCRIPTION OF THE INVENTION

It is an object of this invention to provide a cable-plan generator and a method for connecting a plurality of substation automation devices of a substation automation system, which cable-plan generator and method do not have at least some of the disadvantages of the prior art. In particular, it is an object of the present invention to provide a cable-plan generator and a method for connecting substation automation devices of a substation automation system, wherein cabling costs are minimized, while maintaining required reliability.

According to the present invention, these objects are achieved through the features of the independent claims. In addition, further advantageous embodiments follow from the dependent claims and the description.

According to the present invention, the above-mentioned objects are particularly achieved in that the cable-plan generator comprises a function generator configured to receive connectivity data specifying connection requirements between substation automation devices and cable data specifying cable properties of a set of cable types, and to generate an objective function having a domain relating to feasible cable-plans according to the connectivity data and the cable data. The cable-plan generator further comprises an optimizer configured to determine and generate the cable-plan which optimizes the objective function. According to the objective function, all feasible cable-plans may be taken into account which have the required connections and use available cable types. By way of example, the objective function may relate to cable type usage, total amount of Cu, or total cabling costs. Optimization may then relate to the minimization or to the maximization of a corresponding design objective, for example maximum usage of certain cable types in a cable-plan, minimization of Cu usage, minimization of cable costs, etc.

In other words, an optimized cable-plan including a physical structure of a communication system including cable-level physical connections of a high or medium voltage power network substation automation system with a plurality of substation automation devices, is provided based on all logical connections between substation automation devices and based on available cable type properties, by defining an objective function with optimization variables defining an assignment of all logical connections to cables and subject to cable capacity constraints, and by subsequently solving an optimization problem to derive optimal assignments.

In an embodiment, the function generator is configured to receive site data of a site plan of a substation automation system and to generate an objective function having a domain relating to feasible cable-plans according to the site data. Hence, the optimal cable-plan does not only account for the required connections using available cable types, it also accounts for site requirements like, for example, size of the site, possible locations, including height above ground, of one or more substation automation devices, etc.

In another embodiment, the function generator is configured to receive paired data specifying connection requirements of a pair of fields provided to accommodate the substation automation devices of the substation automation system and to generate an objective function having a domain relating to feasible cable-plans according to the paired data. For substations with several fields or physical assemblies to which the substation automation devices are assigned, the problem of determining an optimal cabling design for a substation automation system may therefore be sub-divided into sub-problems, which may provide more efficient. Furthermore, connections between two different source or destination fields are prevented from being mixed in one cable.

In a further embodiment, the function generator is configured to generate an objective function having a domain relating to feasible cable-plans according to at least one of: cable capacity, amount of copper in a cable, or cost of a cable. Hence, cabling of a substation automation system may take into account one or more of the most important design rules.

In another embodiment, the function generator is configured to generate an objective function which can be optimized with respect to at least one of: cable type usage, total amount of copper usage, or total costs. Accordingly, one ore more of the most important design objectives may be taken into account.

In an embodiment, the function generator is configured to generate an objective function having a domain relating to feasible cable-plans which take into account at least one of: cable rules, or signal rules. For example, cable rules may relate to allowed cable types, to spare conductors in a cable, or to penalizing a cable-plans that disregard a constraint which requires that a specific cable provides for several connections. For example, signal rules may relate to exclusive allocation of a connection or preferred grouping. In particular, constraints may provide for a higher reliability of a substation automation system.

In a further embodiment, the function generator is configured to receive data in a format according to an industry standard format, in particular according to an IEC 61850 standard. Hence, interoperability with existing systems is easily provided.

In another embodiment, the function generator is configured to receive converter/adapter data relating to cable converters/adapters and to generate an objective function having a domain relating to feasible cable-plans according to converter/adapter data. Depending on the substation automation system configuration, an adaptor may be arranged instead of a cable, such that arranging unnecessary cables may be minimized.

In addition to the cable-plan generator for generating a cable-plan for connecting a plurality of substation automation devices of a substation automation system, the invention further relates to a method for connecting a plurality of substation automation devices of a substation automation system and a computer program product comprising a computer-readable medium having stored thereon computer program code.

A method according to the invention comprises receiving data specifying connection requirements between substation automation devices, receiving data specifying cable properties of a set of cable types, generating an objective function having a domain relating to feasible cable-plans according to the connectivity data and the cable data, determining and generating the cable-plan which optimizes the objective function, and connecting a plurality of substation automation devices of a substation automation system according to the cable-plan. In a variant, site data of a site plan of a substation automation system is received and an objective function is generated having a domain relating to feasible cable-plans according to the site data. In another variant, paired data is received specifying connection requirements of a pair of fields provided to arrange the substation automation devices of the substation automation system and an objective function is generated having a domain relating to feasible cable-plans according to the paired data. In a further variant, an objective function is generated having a domain relating to feasible cable-plans according to at least one of: cable capacity, amount of copper in a cable, or cost of a cable. In yet another variant, an objective function is generated which can be optimized with respect to at least one of: cable type usage, total amount of copper usage, or total costs. In a variant an objective function is generated having a domain relating to feasible cable-plans that take into account at least one of: cable rules, or signal rules.

A computer program product comprises a computer-readable medium having stored thereon computer program code which directs a cable-plan generator: to configure a function generator to receive connectivity data specifying connection requirements between substation automation devices and cable data specifying cable properties of a set of cable types, and to generate an objective function having a domain relating to feasible cable-plans according to the connectivity data and the cable data, and to configure an optimizer to determine and generate the cable-plan which optimizes the objective function.

BRIEF DESCRIPTION OF THE DRAWINGS

The present invention will be explained in more detail, by way of example, with reference to the drawings in which:

Fig. 1 shows a block diagram of a computerized cable-plan generator for generating a cable-plan for connecting a plurality of substation automation devices of a substation automation system.
Fig. 2 shows a block diagram of substation automation devices of a substation automation system.
Fig. 3 shows another block diagram of connections between a pair of fields of a substation automation system.
Fig. 4 shows a block diagram of a site plan including optimally arranged fields for arranging substation automation devices of a substation automation system.
Fig. 5 shows a block diagram of a site plan including sub-optimally arranged fields for arranging substation automation devices of a substation automation system.
Fig. 6 shows a flow diagram illustrating exemplary steps for connecting a plurality of substation automation devices of a substation automation system.

DETAILED DESCRIPTION OF PREFERRED EMBODIMENTS

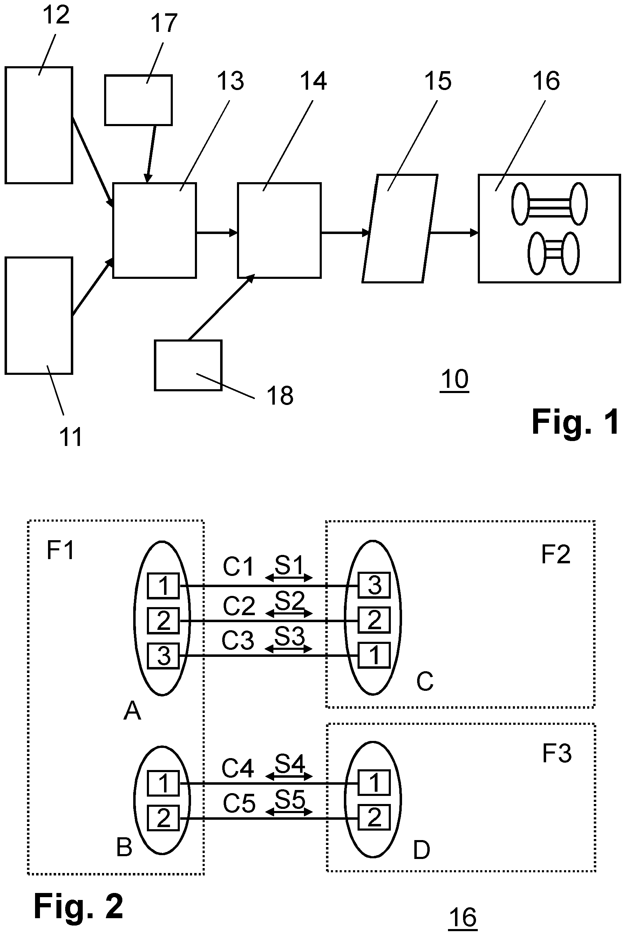

Fig. 1 shows a block diagram illustrating schematically a computerized cable-plan generator 10 according to the invention. A connectivity module 11 is configured to store connectivity data specifying connection requirements between substation devices A, B, C, D of a substation system 16. For example, the connection requirements may be stored in an SCL file (SCL: Substation Configuration Language) according to industry standard, for example according to the IEC 61850 standard. A cable properties module 12 is configured to store cable data specifying cable properties of a set of cable types. Cable type properties may include cable capacity, amount of Cu, cost, or any other property of a cable. A function generator 13 is configured to receive connectivity data from the connectivity module 11 and cable data from the cable properties module 12. The function generator 13 is further configured to generate an objective function having a domain relating to feasible cable-plans according to the connectivity data and the cable data. For example, the objective function may represent the cable costs and may have as the domain all cable-plans feasible according to the connectivity data and the cable data. An optimizer 14 is arranged to determine and generate the cable-plan 15 that optimizes the objective function. The cable-plan 15 enables optimally connecting a plurality of substation automation devices A, B, C, D of a substation system 16. For example, the optimizer 14 may be configured to determine a minimum of the objective function, for example minimal costs.

A function generator configuration module 17 may be connected to the function generator 13 and an optimizer configuration module 18 may be connected to the optimizer 14. The function generator 13 may receive data from the function generator configuration module and generate the objective function accordingly. The optimizer 14 may receive data from the optimizer configuration module 18 and may determine and generated a cable-plan accordingly. For example, at least one of the function generator configuration module 17 or the optimizer configuration module 18 may include further rules or constraints, for example cable rules, signal rules, location rules, a site plan, cost objectives, cable engineering rules or any other rules or constraints. Cable rules may include allowed cable types for a set of connections, e.g. cross section, pin dimensions, etc. of the conductors. Cable rules may also include spare conductors, e.g. the number of spare conductors that have to be left free in each instance of the allowed cable types. Signals rules may include exclusive allocation rules, e.g. that AC and DC signals are in separate cables. Signal rules may also include preferential grouping, e.g. restrictions on the allocation of connections that carry signals that should not be allocated (or preferably allocated) to the same cable. Location rules may include constraints that are stipulated by the site, e.g. the shape of the substation site (for example a rectangular or a quadratic area), level differences (for example, equipment arranged on several floors within the site), etc. Location rules may also include constraints stipulated by the customer or a wish-list, e.g. a scope for expansion, a list of existing cables which shall be left untouched, etc. Location rules may also include engineering standards, for example, safety related standards, and may assure to avoid an unacceptable substation automation system design.

In case of an objective function relating to cable costs, the costs may include material cost (cable types used multiplied by the used length) and installation costs (layout costs, time to install cables). Therefore, the selection of device locations and cable-planning is a joint cost optimization problem (holistic approach).

Fig. 2 shows a substation automation system 16, wherein substation devices A, B, C, D are arranged in fields F1, F2, F3, and wherein the substation devices A, B, C, D are interconnected through connections C1, C2, C3, C4, C5. The fields may correspond to a physical assembly interface class, for example to a metering box, protection cubicle etc. The substation device A may have pins 1, 2, 3, the substation device B pins 1, 2, 3, the substation device C pins 1, 2, and the substation device D pins 1, 2, wherein the pins of the substation devices form the physical interconnection interface to and/or from the substation device. A connection C1, C2, C3, C4, C5 may form a unique path between two pins and each connection may carry a physical signal S1, S2, S3, C4, S5. A signal S1, S2, S3, C4, S5 may traverse over one or more connections, for example. A connection may be formed by one of the conductors of a cable. The type of cables to which a connection is assigned to may be based on cable engineering rules that may be classified basically into two types, namely the cable rules and the signal rules. The cable rules may specify the allowed cable types for connections. It may also specify the number of spare conductors that are to be left free in a cable. The signal rules may specify restrictions on the allocation of connections that carry signals that may not be assigned to the same cable or that may be preferably assigned to the same cable.

The cable-planning problem may be solved by an integer linear program formulation. The cable-planning problem may be divided into sub-problems, where each sub-problem is directed to connections between distinct set of field pairs, whereby the physical assembly interface classes may be considered and wherein it may be taken into account that different source or destination physical assembly interface classes in one cable are not mixed. Hence, a cable-plan for each distinct field pairs may be derived.

The set $C = \{1,2,3,...,N\}$ may represent the set of all connections between two field pairs, where $N$ may denote the total number of connections, and $K = \{1,2,3,...,M\}$ may represent the set of all cable types, where $M$ may denote the total number of cable types. A cable instance may include one or more connections and the connection with a lower index among all connections in a cable may be referred to as the "leader" and the other connections may be referred to as the "followers". This may imply that all connections except the first connection in $C$ may be either a leader or a follower. Moreover, based on signal rules, a set of connection pairs $X$ may be derived, where each $(i, \hat{i}) \in X$ may represent the connections $i$ and $\hat{i}$ that must not be assigned to the same cable. The set $\overline{C}$ may denote the set of connection pairs $(i,\hat{i})$ where $(i,\hat{i}) \in C, i > \hat{i}, (i,\hat{i}) \notin X$. The binary variable $X_{i,\hat{i}}$, where $(i,\hat{i}) \in \overline{C}$, may be set to true in order to imply that connection $i$ is a follower of a leader $\hat{i}$.

$$X_{i,\hat{i}} = 0 \text{ or } 1, \text{ where } \left(i, \hat{i}\right) \in \overline{C}.$$

Based on the cable rules, the set $Y$ may denote the set of connection cable pairs, where $(i,j) \in Y$ implies that cable type $j$ is not allowed for connection $i$. The set $\overline{K}$ may denote the set of connection cable pairs $(i,j)$, where $i \in C, j \in K, (i,j) \notin Y$. The binary variable $Y_{i,j}$, where $(i,j) \in \overline{K}$, may be set to true in order to imply that the leader $i$ is assigned to an instance of cable type $j$.

$$Y_{i,j} = 0 \text{ or } 1, \text{ where } \left(i, j\right) \in \overline{K}.$$

Table 1 illustrates all binary variables corresponding to the example shown in Fig. 2 for the case with two cable types $K1$ and $K2$.

Table 1

|  | C1 | C2 | C3 | C4 | C5 | K1 | K2 |
|---|---|---|---|---|---|---|---|
| C1 | - | - | - | - | - | $Y_{1,1}$ | $Y_{1,2}$ |
| C2 | $X_{2,1}$ |  |  |  | - | $Y_{2,1}$ | $Y_{2,2}$ |
| C3 | - | $X_{3,2}$ | - | - | - | - | $Y_{3,2}$ |
| C4 | $X_{4,1}$ | $X_{4,2}$ | $X_{4,3}$ | - | - | $Y_{4,1}$ | $Y_{4,2}$ |
| C5 | $X_{5,1}$ | $X_{5,2}$ | $X_{5,3}$ | $X_{5,4}$ | - | $Y_{5,1}$ | $Y_{5,2}$ |

It is assumed that connections $C1$ and $C3$ cannot be assigned to the same cable and $K1$ is not an allowed cable type for connection $C3$. As mentioned before, all connections except the first connection, which must be a leader, may be either a leader or a follower. This may be ensured by the following constraint:

$$\sum_{(i,\hat{i})\in C} X_{i,\hat{i}} + \sum_{\substack{j\in K \\ (i,j)\in\overline{K}}} Y_{i,j} = 1, \forall i \in C.$$

A connection that is a leader in a cable cannot be a follower of a leader in another cable. This may be expressed by the following constraint:

$$X_{i,\hat{i}} + \sum_{(\hat{i},i^*)\in \overline{C}} X_{\hat{i},i^*} \leq 1, \forall (i,\hat{i}) \in \overline{C}\,.$$

A further constraint may be implicitly the capacity constraint, which implies that the number of connections assigned to a cable have to be less than the capacity requirement, i.e. the total number of conductors in that cable minus the spare core requirements of the cable. $U_j$ and $S_j$ may denote the total number of conductors and the required spare cores in cable type $j$. The following equation may express the capacity constraint:

$$1 + \sum_{(i,\hat{i})\in \overline{C}} X_{i,\hat{i}} - \sum_{(\hat{i},i^*)\in \overline{C}} X_{\hat{i},i^*} \leq \sum_{(\hat{i},j)\in \overline{K}} (U_j - S_j)\cdot Y_{\hat{i},j}\,, \ \forall \hat{i} \in C\,.$$

In this equation, if the connection $\hat{i}$ is a leader, then the sum of all connections including the connection $\hat{i}$ and its follower is less than the capacity requirements of the cable type $j$ to which $\hat{i}$ is assigned, otherwise the equation is satisfied by default.

In addition, the problem formulation needs the following constraint to avoid indirect pairing of connections $i$ and $i^*$ which have the same leader $\hat{i}$, but $(i,i^*)$ is in $X$:

$$X_{i,\hat{i}} + X_{i^*,\hat{i}} \leq 1, \ \forall (i,\hat{i}),(i^*,\hat{i}) \in \overline{C}, \text{ where } i > i^*, (i,i^*) \notin \overline{C}\,.$$

Similarly, the following constraint prohibits a follower to choose a leader whose selected cable type is not one of the allowed cable types of the follower:

$$X_{i,\hat{i}} + Y_{\hat{i},j} \leq 1, \ \forall (i,\hat{i}) \in \overline{C}, j \in K, \text{ where } (\hat{i},j) \in \overline{K}, (i,j) \notin \overline{K}\,.$$

The sub-problem may include a set of preferred allocation rules, which specify that all connections carrying certain signals should preferably be assigned to the same cable. This is achieved by introducing a penalty cost in the objective function. The penalty const will be high when not all connections of any preferred allocation rule are assigned to the same cable or when there exists more than one leader among the connections within any preferred allocation rule. These constraints are not explicitly expressed here.

The task of the optimizer is then to determine the solution to the following minimization:

$$\text{minimize:} \quad \sum_{(i,j)\in \overline{K}} M_j \cdot Y_{i,j}\,.$$

where $M_j$ is the cost of cable type $j$. Hence, the optimizer determines the cable-plan with minimal total cable costs for connecting substation devices in a substation automation system and the substation automation system may be constructed accordingly.

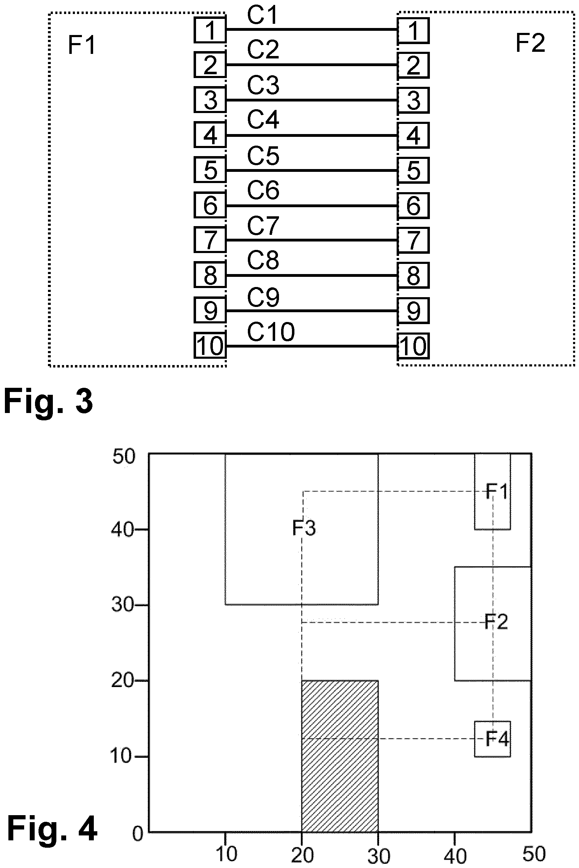

Fig. 3 shows a first example comparing generation of a cable-plan with a manual approach and with a cable-plan generator according to the invention. The manual approach considers one rule at a time, wherein the order in which the rules are selected influence the end result. The cable-plan generator considers all rules and therefore determines the optimal end result. In Fig. 3, a first field F1 and a second field F2 are to be connected by connections C1 to C10. The allowed cable types for these connections are 4x2.5mm$^2$ and 6x2.5mm$^2$, with costs of 75 units and 100 units respectively.

In case 1, the connections C1 to C4 must be grouped together and connections C7 to C8 must not be mixed with connections C5 to C6 and connections C9 to C10.

The comparison of the result of the manual approach and of the cable-plan generator are shown in Table 2:

Table 2

| Method | Cable instances | Total cost |
|---|---|---|
| Manual | $4 \times 2.5mm^2$ (C1 to C4)<br>$4 \times 2.5mm^2$ (C5 to C6, C9 to C10)<br>$4 \times 2.5mm^2$ (C7 to C8) | 3x75=225 units |
| Cable-plan generator | $6 \times 2.5mm^2$ (C1 to C4, C7 to C8)<br>$4 \times 2.5mm^2$ (C5 to C6, C9 to C10) | 1x100+1x75=175 units |

As the manual approach considers the rules in the order as defined above, the result consists of three $4 \times 2.5mm^2$ cables with connections C1 to C4 allocated to the first cable, connections C5 to C6 and C9 to C10 allocated to the second cable and connections C7 to C8 allocated to the third cable. This is a valid result, but it is not optimal, because the manual approach selects a local optimal choice when considering one rule after the other, which may fail to generate the optimal solution. The solution according to the cable-plan generator guarantees to determine the optimal solution with connections C1 to C4 and C7 to C8 allocated to a $6 \times 2.5mm^2$ cable and connections C5 to C6 and C9 to C10 allocated to a $4 \times 2.5mm^2$ cable, because all rules are considered and evaluated in order to deduce the optimal result.

In case 2, the number of spare cores requirement for $4 \times 2.5mm2$ and $6 \times 2.5mm2$ cable types are 2 and 0 respectively. Moreover, connections C3 to C4 must not be mixed with connections C1 to C2 and connections C5 to C8 must be grouped.

Table 3

| Method | Cable instances | Total cost |
|---|---|---|
| Manual | $4 \times 2.5mm2$ (C1 to C2, 2 spare)<br>$4 \times 2.5mm2$ (C3 to C4, 2 spare)<br>$6 \times 2.5mm2$ (C5 to C10, 0 spare)<br>$4 \times 2.5mm2$ (C11 to C12, 2 spare) | 3x75+1x100=325 units |
| Cable-plan generator | $6 \times 2.5mm2$ (C1 to C2, C5 to C8, 2 spare)<br>$6 \times 2.5mm2$ (C3 to C4, C9 to C12, 2 spare) | 2x100=200 units |

Assuming that the manual approach considers the rule in the order as they are defined above, connections C1 to C2 are allocated to the first $4 \times 2.5mm^2$ cable with two spare cores, connections C3 to C4 are allocated to the second $4 \times 2.5mm^2$ with two spare cores, connections C5 to C10 are allocated to the first $6 \times 2.5mm^2$ cable with no spare cores and connections C11 to C12 are allocated to the third $4 \times 2.5mm^2$ cable with two spare cores. This is also a valid result, but it is not optimal (refer to Table 3). This is because the manual approach selects the local optimal choice when considering a rule, which may fail to generate the optimal solution, whereas the cable-plan generator guarantees to determine the optimal solution with connections C1 to C2 and C5 to C8 allocated to the first $6 \times 2.5mm^2$ cable with no spare cores and connections C3 to C4 and C9 and C12 allocated to the second $6 \times 2.5mm^2$ cable with no spare cores, as all rules are taken into account to deduce the optimal result.

Fig. 4 shows a second example comparing generating a cable-plan with a manual approach and with a cable-plan generator according to the invention. A site has the dimensions 50 (width) x 50 (height) $m^2$. Four fields F1 to F4 are to be located within the site. The dimensions of the fields are shown in Table 4.

Table 4

| Field | width (m) | height (m) |
|---|---|---|
| F1 | 5 | 10 |
| F2 | 10 | 20 |
| F3 | 20 | 20 |
| F4 | 5 | 5 |

The site has the constraint that no devices may be placed inside the shaded field with coordinates (20,0), (30,0), (30,20) and (20,20). Moreover, at least 10 m separation between the bottom left corner of any field F1 to F4 and the top right corner of the shaded field. According to engineering standards, at least 5 m separation between the bottom left corner of a field and the top right corner of another field shall be maintained. The customer requires placing field F3 inside coordinates (10,30), (30,30), (30,50) and (10,50). Moreover, the customer requires that cable trenches are rectilinear (i.e. straight line trenches) between the centers of all fields. In addition the customer requires that a field with index "j" must be placed below of or to the left of field "i" when j > i.

The optimal layout generated by the cable-plan generator of all fields in the site taking into account all the above location rules is shown in Fig. 4. The shaded rectangle denotes the restricted site and the empty rectangles denote the fields. The trenches that hold the cables between the centers of fields are shown in dotted lines. The length of the cable between the centers of fields is shown in Table 5:

Table 5

| from field | to field | width (m) | height (m) | cable length (m) |
|---|---|---|---|---|
| F1 | F2 | 0 | 17.5 | 17.5 |
| F1 | F3 | 25 | 5.0 | 30.0 |
| F1 | F4 | 0 | 32.5 | 32.5 |
| F2 | F3 | 25 | 12.5 | 37.5 |
| F2 | F4 | 0 | 15.0 | 15.0 |
| F3 | F4 | 25 | 27.5 | 52.5 |
| | | | total cable length | 185.0 |

According to the cable-plan generated by the cable-plan generator, the optimal total cable length for the given example is 185 m. The total cable trench length is equal to 3x25+27.5+5+32.5=140 units, i.e. sum of width of F1 to F3, width of F2 to F3, width of F3 to F4, height of F3 to F4, height of F1 to F3 and height of F1 to F4. For example, the installation costs for 1m of cable is 100 units and the layout costs for 1m cable trench may be 500 units. In this case, the total installation costs and the total cable trench layout costs for the optimal case is equal to 18500 units and 70000 units respectively.

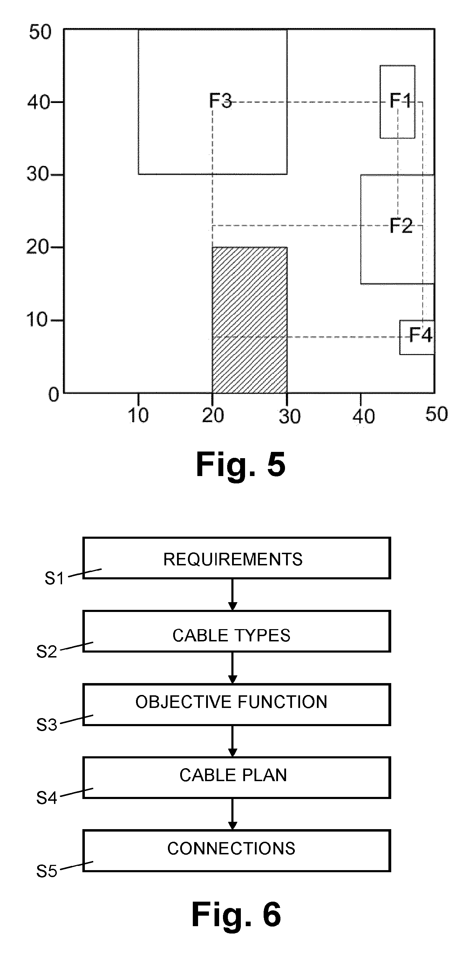

In case of a manual approach, a sub-optimal allocation as shown in Figure 5 may result. The length of the cable between the centers of fields is shown in Table 6:

Table 6

| from field | to field | width (m) | height (m) | cable length (m) |
|---|---|---|---|---|
| F1 | F2 | 0 | 17.5 | 17.5 |
| F1 | F3 | 25.0 | 0 | 25.0 |
| F1 | F4 | 2.5 | 32.5 | 35.0 |
| F2 | F3 | 25.0 | 17.5 | 42.5 |
| F2 | F4 | 2.5 | 15.0 | 17.5 |
| F3 | F4 | 27.5 | 32.5 | 60.0 |
| | | | total cable length | 197.5 |

The total cable length obtained using manual approach for the given example is 197.5 m. The total cable trench length is equal to 2x25+2x25+27.5+2x32.5+17.5=165 units, i.e. sum of width of F1 to F3, width of F2 to F3, width of F1 to F4, width of F2 to F4, width of F4 to F3, height of F1 to F4, height of F3 to F4 and height of F1 to F2. In this case, the total installation costs and the total cable trench layout costs for the optimal case is equal to 19750 units and 82500 units respectively. Apparently, the manual solution is sub-optimal.

Referring to Fig. 5, exemplary steps are described for connecting a plurality of substation automation devices of a substation automation system. In step S1, data specifying connection requirements between substation devices are received. In step S2, data specifying cable properties of a set of cable types are received. In step S3, an objective function is generated, in particular based on data received in step S1 and in step S2. In step S4, an optimal solution for the objective function is determined and a cable-plan is generated which corresponds to the optimal solution. In step S5 a plurality of substation automation devices of a substation automation system is connected according to the cable-plan.

**Claims**

1. A computerized cable-plan generator (10) for generating a cable-plan (15) for connecting a plurality of substation automation devices (A, B, C, D) of a substation automation system (16), the cable-plan generator (10) comprising:

    a function generator (13) configured to receive connectivity data specifying connection requirements between substation automation devices (A, B, C, D) and
    cable data specifying cable properties of a set of cable types, and to generate an objective function having a domain relating to feasible cable-plans according to the connectivity data and the cable data, and
    an optimizer (14) configured to determine and generate a cable-plan (15) that optimizes the objective function.

2. The cable-plan generator (10) according to claim 1, wherein the function generator (13) is configured to receive site data of a site plan of a substation automation system and to generate an objective function having a domain relating to feasible cable-plans according to the site data.

3. The cable-plan generator (10) according to claim 1 or 2, wherein the function generator (13) is configured to receive paired data specifying connection requirements of a pair of fields to which the substation automation devices (A, B, C, D) of the substation automation system (16) are assigned, and to generate an objective function having a domain relating to feasible cable-plans according to the paired data.

4. The cable-plan generator according to one of claims 1 to 3, wherein the function generator (13) is configured to generate an objective function having a domain relating to feasible cable-plans according to at least one of: cable capacity, amount of copper in a cable, or cost of a cable.

5. The cable-plan generator according to one of claims 1 to 4, wherein the function generator (13) is configured to generate an objective function which can be optimized with respect to at least one of: cable type usage, total amount of copper usage, or total costs.

6. The cable-plan generator (10) according to one of claims 1 to 5, wherein the function generator (13) is configured to generate an objective function having a domain relating to feasible cable-plans which take into account at least one of:

    cable rules, or signal rules.

7. The cable-plan generator (10) according to one of claims 1 to 6, wherein the function generator (13) is configured to receive connectivity data in a format according to an industry standard format, in particular according to an IEC 61850 standard.

8. The cable-plan generator (10) according to one of claims 1 to 7, wherein the function generator (13) is configured to receive converter/adapter data relating to cable converters/adapters and to generate an objective function having a domain relating to feasible cable-plans according to converter/adapter data.

9. A method for connecting a plurality of substation automation devices (A, B, C, D) of a substation automation system (16), the method comprising:

    receiving data specifying connection requirements between substation automation devices (A, B, C, D),
    receiving data specifying cable properties of a set of cable types,
    generating an objective function having a domain relating to feasible cable-plans according to the connectivity data and the cable data,
    determining and generating the cable-plan (15) which optimizes the objective function, and
    connecting a plurality of substation automation devices (A, B, C, D) of a substation automation system (16) according to the cable-plan (15).

10. The method according to claim 9, further comprising receiving site data of a site plan of a substation automation system and generating an objective function having a domain relating to feasible cable-plans according to the site data.

11.  The method according to claim 9 or 10, further comprising receiving paired data specifying connection requirements of a pair of fields provided to arrange the substation automation devices (A, B, C, D) of the substation automation system (16) and generating an objective function having a domain relating to feasible cable-plans according to the paired data.

12.  The method according to one of claims 9 to 11, further comprising generating an objective function having a domain relating to feasible cable-plans according to at least one of: cable capacity, amount of copper in a cable, or cost of a cable.

13.  The method according to one of claims 9 to 12, further comprising generating an objective function which can be optimized with respect to at least one of: cable type usage, total amount of copper usage, or total costs.

14.  The method according to one of claims 9 to 13, further comprising generating an objective function having a domain relating to feasible cable-plans which take into account at least one of: cable rules, or signal rules.

15.  A computer program product comprising a computer-readable medium having stored thereon computer program code which directs a cable-plan generator (10):

   to configure a function generator (13) to receive connectivity data specifying connection requirements between substation automation devices (A, B, C, D) and
   cable data specifying cable properties of a set of cable types, and to generate an objective function having a domain relating to feasible cable-plans according to the connectivity data and the cable data, and
   to configure an optimizer (14) to determine and generate the cable-plan (15) which optimizes the objective function.

12    17    13    14    15    16

10

**Fig. 1**

11

18

F1    F2

C1  S1

C2  S2

C3  S3

A    C

F3

C4  S4

C5  S5

B    D

**Fig. 2**

16

**Fig. 3**

**Fig. 4**

Fig. 5

Fig. 6

Europäisches
Patentamt

European
Patent Office

Office européen
des brevets

## EUROPEAN SEARCH REPORT

Application Number

EP 11 18 8156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIVANTHI T ET AL: "Efficient planning of substation automation system cables", LECTURE NOTES IN COMPUTER SCIENCE (INCLUDING SUBSERIES LECTURE NOTES IN ARTIFICIAL INTELLIGENCE AND LECTURE NOTES IN BIOINFORMATICS) - INTEGRATION OF AI AND OR TECHNIQUES IN CONSTRAINT PROGRAMMING FOR COMBINATORIAL OPTIMIZATION PROBLEMS, vol. 6697, 23 May 2011 (2011-05-23), - 27 May 2011 (2011-05-27), pages 210-214, XP002673902, 8th International Conference on Integration of AI and OR Techniques inConstraint Programming for Combinatorial Optimization Problems (CPAIOR2011), Berlin DE DOI: 10.1007/978-3-642-21311-3_20 ISBN: 978-3-642-21310-6 * the whole document * | 1-15 | INV. G06F17/50 |

-----

TECHNICAL FIELDS
SEARCHED    (IPC)

G06F

The present search report has been drawn up for all claims

| Place of search | Date of completion of the search | Examiner |
|---|---|---|
| Munich | 17 April 2012 | Alonso Nogueiro, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5689417 A

- US 4939668 A